# EUROPÄISCHE PATENTSCHRIFT

(11) **EP 3 907 263 B1**
(45) Veröffentlichungstag und Bekanntmachung des Hinweises auf die Patenterteilung: **05.07.2023**
(21) Anmeldenummer: 21172619.5
(22) Anmeldetag: 06.05.2021
(51) Int. Cl.: C09J 7/38, C09J 123/16

(54) **HOCHTEMPERATUR-HAFTKLEBEMASSE AUF BASIS VON EPDM-KAUTSCHUK**
HIGH TEMPERATURE ADHESIVE MASS BASED ON EPDM RUBBER
MATIÈRE ADHÉSIVE À HAUTE TEMPÉRATURE À BASE DE CAOUTCHOUC EPDM

(30) Priorität: 07.05.2020 DE 102020205795
(43) Veröffentlichungstag der Anmeldung: 10.11.2021
(73) Patentinhaber: tesa SE, 22848 Norderstedt (DE)
(72) Erfinder: LIM, CaiRong, 22609 Hamburg (DE); ERBEN, Nora, 22085 Hamburg (DE)
(74) Vertreter: tesa SE

(56) Entgegenhaltungen:
- EP-A1- 3 594 303
- DE-A1-102015 217 376
- US-A- 5 888 602

## Beschreibung

Die Erfindung betrifft ein Haftklebeband, das eine auf EPDM-Kautschuk basierende Haftklebemasse umfasst, wobei die Haftklebemasse Weichmacher und Klebharz enthält, und die Verwendung des Haftklebebandes.

Haftklebemassen sind seit langem bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruht auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, sogenannte Haftklebebänder, werden heute im industriellen und privaten Bereich in vielfältiger Weise verwendet. Üblicherweise bestehen Haftklebebänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.

Ein Einsatzgebiet für Haftklebebänder ist die Verwendung als Abdeckband oder Englisch "masking tape". Industriell finden solche Abdeckbänder zum Beispiel in der Automobilindustrie beim Lackieren Verwendung. An die Abdeckbänder werden dabei besondere Anforderungen gestellt. So müssen die Abdeckbänder eine gute Temperaturbeständigkeit aufweisen, um das auf das Lackieren folgende Trocknen zerstörungsfrei zu durchlaufen. Bei Hochtemperaturanwendungen liegen die Temperaturen für die Trocknung oberhalb von 120°C. Nach erfolgter Lackierung und Trocknung müssen sich die Abdeckbänder rückstandsfrei entfernen lassen. Dabei ist insbesondere das sogenannte "Ghosting" zu vermeiden. Als "Ghosting" wird der Schimmer bezeichnet, der auf dem durch das Abdeckband geschützten Bereich zu sehen ist, nachdem das Abdeckband abgezogen wurde, und der durch Haftklebemasserückstände auf dem Material hervorgerufen wird.

Weiterhin müssen Adhäsion und Kohäsion sorgfältig eingestellt werden. Die Adhäsion darf einerseits nicht zu groß sein, um ein rückstandsfreies Ablösen zu gewährleisten, auf der anderen Seite ist eine ausreichende Adhäsion erforderlich, damit die Klebkraft ausreicht, um zu vermeiden, dass sich das Abdeckband bereits während des Trocknungsprozesses, der häufig von Umluftzufuhr begleitet wird, löst. Die Kohäsion der Haftklebemasse für ein solches Abdeckband muss hoch sein, um eine ausreichende innere Festigkeit der Klebemasse zu gewährleisten, damit das Abdeckband beim Ablösen nicht reißt.

Die meisten derzeit verwendeten Abdeckbänder sind solche auf Naturkautschukbasis.

Aufgrund des hohen Molekulargewichts der dabei verwendeten Polymere weisen solche Abdeckbänder eine ausgezeichnete Ablösbarkeit auf. Naturkautschuk ist jedoch aufgrund der ungesättigten Doppelbindungen im Backbone des Polymers anfällig für temperatur- und/oder UV-induzierte Alterung. Um diese Anfälligkeit zu verringern, werden die bisher für Abdeckbänder verwendeten Haftklebemassen auf Naturkautschukbasis oftmals nachvernetzt. Abdeckbänder mit solchen Haftklebemassen sind dann für Temperaturen bis 160°C geeignet. Allerdings zeigen solche nachvernetzten Abdeckbänder bei geringeren Temperaturen <100°C Rückstände.

Die DE 10 2017 202 668 A1 offenbart eine weichmacherfreie Haftklebemasse auf EPDM-Basis (Ethylen-Propylen-Dien-Kautschuk). Die Vernetzung des dort beschriebenen Maleinsäureanhydrid-gepfropften EPDMs führt allerdings zu einem drastischen Verlust der Klebkraft. Außerdem sind nur sehr kurze Prozesszeiten möglich, da andernfalls die Gefahr des Crosslinkings schon bei der Herstellung im Extruder besteht. Auch die Beschichtung des Trägers mit der Haftklebemasse ist erschwert.

Zur Erhöhung der Klebkraft können flüssige EPDMs und/oder Weichmacher zugesetzt werden. Dies führt jedoch zu Klebmasserückständen und zu Ghosting.

Die DE 10 2015 217 376 A1 offenbart daher eine Haftklebemasse mit einem vernetzbaren Polymer mit Carbonsäure- und/oder Carbonsäureanhydridgruppen und Organosilanen, die mit einer solchen Carbonsäure- und/oder Carbonsäureanhydridgruppe eine chemische Bindung eingehen, sowie Klebharz. Auch hier bestehen Probleme aufgrund der erforderlichen Vernetzung. Außerdem ist die Scherkraft der in dieser Schrift offenbarten Haftklebemassen noch verbesserungsbedürftig.

Die WO 2020043556 A1 offenbart eine Haftklebemasse auf Basis von festem EPDM-Kautschuk, die Weichmacher und Klebharz sowie einen Blend aus mindestens zwei festen EPDM-Kautschuken enthält, wobei der Blend von 10 bis 30 Gew.-% mindestens eines ersten EPDM-Kautschuks mit einer Mooney-Viskosität von mindestens 83 (ML 1+8 150°C) und von 20 bis 50 Gew.-% mindestens eines zweiten EPDM-Kautschuks mit einer Mooney-Viskosität in einem Bereich von 65 bis 85 (ML 1+4 125°C) aufweist.

Die EP 3 594 303 A1 offenbart Haftklebemassen auf Basis eines Gemisches aus einem festen und einem flüssigen EPDM Kautschuk, welche für die Herstellung von Haftklebebändern geeignet sind.

Aufgabe der vorliegenden Erfindung war es daher, ein Haftklebeband mit einer Haftklebemasse auf EPDM-Basis bereitzustellen, wobei die Haftklebemasse eine Temperaturbeständigkeit auch bei Temperaturen von bis zu 180°C aufweist und sich trotzdem im Anschluss leicht und rückstandslos Ablösen lässt.

Diese Aufgabe wird erfindungsgemäß mit einem Haftklebeband gemäß Hauptanspruch gelöst. Danach umfasst das Haftklebeband einen Träger und mindestens eine Schicht aus einer Haftklebemasse auf Basis von festem EPDM-Kautschuk, wobei die Haftklebemasse einen Blend aus mindestens zwei festen EPDM-Kautschuken enthält, wobei der Blend von 10 bis 30 Gew.-% mindestens eines ersten EPDM-Kautschuks mit einer Mooney-Viskosität von mindestens 83 (ML 1+8 150°C) und von 20 bis 50 Gew.-% mindestens eines zweiten EPDM-Kautschuks mit einer Mooney-Viskosität in einem Bereich von 65 bis 85 (ML 1+4 125°C) aufweist.

Die Angabe Gew.-% ist bezogen auf die Zusammensetzung der gesamten Haftklebemasse, also inklusive der Klebharze und Weichmacher sowie etwaiger weiterer Bestandteile.

Die erfindungsgemäß umfassten Haftklebemassen zeigen signifikante Vorteile in Bezug auf die rückstands- und ghostingfreie Ablösbarkeit nach Termperaturbehandlung bis 180°C, und zwar beim Ablösen in einem Temperaturbereich von Raumtemperatur (25°C) bis 180°C. Getestet wurde das Ablösen 30 Minuten nach Temperaturbehandlung. Völlig unerwartet wird durch die Verwendung von mindestens einem EPDM-Kautschuk mit hoher Mooney-Viskosität die Scherkraft verbessert, ohne dass eine Vernetzung der Klebemasse erforderlich ist. Indem auf eine Vernetzung verzichtet werden kann, wird auch die Herstellung der Klebemasse und die Beschichtung auf einen Träger vereinfacht.

Durch die Verwendung von zwei verschiedenen EPDM-Kautschuken mit unterschiedlicher Mooney-Viskosität ist einerseits die beschriebene Verbesserung der Scherkraft möglich (induziert durch die Kautschukkomponente mit hoher Viskosität). Andererseits stellt die Kautschukkomponente mit der niedrigeren Viskosität sicher, dass die Klebemasse über eine hinreichend große Klebkraft verfügt, damit die Klebeverbindung z.B. in der Anwendung der Klebemasse als Abdeckband gewissen mechanischen Beanspruchungen standhält.

Mit einer Haftklebemasse auf Basis von festem EPDM-Kautschuk ist typischerweise eine Haftklebemasse gemeint, deren Polymer zu mindestens 50 Gew.-% aus festem EPDM-Kautschuk besteht, bezogen auf das gesamte in der Haftklebemasse enthaltene Polymer. In einer bevorzugten Ausführungsform besteht das in der Haftklebemasse enthaltene Polymer zu mehr als 80 Gew.-%, bevorzugter zu mehr als 90 Gew.-%, besonders bevorzugt zu mehr als 95 Gew.-% und insbesondere zu 100 Gew.-% aus festem EPDM-Kautschuk. Im Rahmen der vorliegenden Anmeldung gelten Klebharze dabei nicht als Polymere.

Die Mooney-Viskosität wird nach DIN 53523 bestimmt. Die Viskositätsbestimmung nach Mooney wird insbesondere zur Messung der Viskosität von Kautschuk und Kautschukmischungen angewendet. Dabei wird das Drehmoment der Mischung bei Erhöhung der Temperatur (äußere Temperatur meistens 100 °C) mit dem Mooney-Viskosimeter gemessen. Ein Mooney-Viskosimeter besteht aus einer Kammer, in der ein Rotor dreht. Dabei können zwei Größen von Rotoren zum Einsatz kommen. Für die vorliegende Erfindung wird unter Verwendung des großen Rotors 38,1 mm (1,5 Zoll) gemessen. Die Viskosität wird daher als "ML" (L für "large") gekennzeichnet. Nach einer Vorwärmzeit dreht der Rotor des Viskosimeters mit konstant 2/min. Der scheibenförmige Rotor rotiert dabei mittig in einer vollständig geschlossenen Kammer. Weil die Kammer vollständig geschlossen ist, weichen die Strömungsverhältnisse am Rand der Scheibe stark von der Strömung eines reinen Platte-Platte-Viskosimeters ab. Dadurch ergibt sich am Rand des Rotors eine Schergeschwindigkeit von etwa 1,56 1/s. Das dabei gemessene Drehmoment wird in Mooney-Einheiten ("Mooney Units" = "MU") umgerechnet (8,3 Nm = 100 MU). Als Ergebnis der Messung wird die Mooney-Viskosität durch Angabe des verwendeten Rotors (L/S), der Vorheizzeit in Minuten, des Messintervalls, ebenfalls in Minuten, und der Außentemperatur angegeben.

Eine Angabe "83 (ML 1+8 150°C)" bedeutet also eine Mooney-Viskosität von 83 MU, gemessen mit einem großen Rotor ("L"), einer Vorheizzeit von einer Minute und eines Messintervalls von acht Minuten bei einer Außentemperatur von 150°C. Eine Angabe "85 (ML 1+4 125°C)" bedeutet eine Mooney-Viskosität von 85, gemessen mit einem großen Rotor, einer Vorheizzeit von einer Minute und eines Messintervalls von vier Minuten bei einer Außentemperatur von 125°C.

Besonders bevorzugt ist der feste EPDM-Kautschuk dabei zu 55 bis 75 Gew.-%, vorzugsweise 55 bis 65 Gew.-%, insbesondere größer 55 bis 60 Gew.-%, aus Ethylen aufgebaut, bezogen auf das Gesamtgewicht der zugrunde liegenden Monomerzusammensetzung.

Die viskoelastischen Eigenschaften von EPDM werden wesentlich vom Ethylengehalt bestimmt, da Polyethylen eine starke Tendenz zum Kristallisieren hat. Polymere mit einem Ethylengehalt zwischen 40 und 55 Gew.-% sind amorph und haben die beste Kälteflexibilität. Mit steigendem Gehalt an Ethylen nimmt die Kristallinität zu. Ein EPDM mit mittlerem Ethylengehalt von 55 bis 65 Gew.-% ist teilkristallin. Polymere mit über 65 Gew.-% Ethylen haben größere kristalline Bereiche und verhalten sich wie thermoplastische Elastomere; diese haben bereits im unvernetzten Zustand eine hohe Reißfestigkeit, die mit steigendem Ethylenanteil bis zu 12 MPa betragen kann.

Der feste EPDM-Kautschuk ist vorzugsweise zu 20 bis 60 Gew.-%, bevorzugter 30 bis 50 Gew.-%, aus Propylen aufgebaut, jeweils bezogen auf das Gesamtgewicht der zugrunde liegenden Monomerzusammensetzung.

Der feste EPDM-Kautschuk ist vorzugsweise zu 2 bis zu 20 Gew.-%, bevorzugter 2 bis 10 Gew.-%, aus Dien aufgebaut, jeweils bezogen auf das Gesamtgewicht der zugrunde liegenden Monomerzusammensetzung. Der Dien-Gehalt kommerzieller Produkte liegt zwischen 2 und 12 Gew.-%, entsprechend einem Anteil von 3 bis 16 Doppelbindungen pro 1000 C-Atomen. Ein höherer Dien-Gehalt bewirkt eine höhere Vernetzungsgeschwindigkeit, eine höhere Vernetzungsdichte, höhere Festigkeiten und eine geringere bleibende Verformung. Die Alterungs-, Witterungs- und Ozonbeständigkeit nimmt dagegen mit steigendem Dien-Gehalt ab. Vorzugsweise ist das Dien Ethyliden-Norbornen (ENB), Dicyclopentadien oder 1,4-Hexadien.

Besonders gute Eigenschaften in Bezug auf Ghosting und Klebkraft wird erreicht, wenn in der Haftklebemasse der Anteil des ersten EPDM-Kautschuks 15 bis 25 Gew.-%, vorzugsweise 18 bis 23 Gew.-%, insbesondere 19 bis 21 Gew.-% beträgt, bezogen auf das Gesamtgewicht der Haftklebemasse.

Ebenfalls besonders gute Eigenschaften erhält man, wenn in der Haftklebemasse der Anteil des zweiten EPDM-Kautschuks 25 bis 40 Gew.-%, vorzugsweise 27 bis 35 Gew.-%, insbesondere 28 bis 31 Gew.-% beträgt, bezogen auf das Gesamtgewicht der Haftklebemasse.

Besonders bevorzugt ist darüber hinaus eine Haftklebemasse, bei der der erste EPDM-Kautschuk eine bimodale Molmassenverteilung aufweist. Dies bedeutet, dass die Molmassenverteilung im Massenspektrum zwei Peaks zeigt, einen im Bereich der niedermolekularen Verbindungen, und eine im Bereich der hochmolekularen Verbindungen. Die Molekulargewichtsverteilung im Sinne der Polydispersität beträgt vorzugsweise 2,0 bis 2,5. Diese bimodalen Kautschuke sind somit zum Teil aus niedermolekularen Bestandteilen aufgebaut, und zwar vorzugsweise zum größeren Teil, und zum Teil aus hochmolekularen Bestandteilen.

Vorzugsweise ist neben den festen EPDM-Kautschuken kein weiteres Polymer in der Haftklebemasse vorhanden.

Den EPDM-Kautschuken können inerte Trennhilfsmittel wie Talkum, Silicate (Talk, Ton, Glimmer), Zinkstearat und PVC-Puder zugesetzt sein, und zwar insbesondere in einer Größenordnung von 3 phr. Vorzugsweise sind die Trennhilfsmittel gewählt aus der Gruppe bestehend aus Talkum, Silicate (Talk, Ton, Glimmer), Zinkstearat und PVC-Puder.

Die erfindungsgemäß umfasste Haftklebemasse enthält des Weiteren Klebharz. Unter der Bezeichnung "Klebharz", englisch "Tackifier Resin", versteht der Fachmann einen Stoff auf Harzbasis, der die Klebrigkeit erhöht. Typische Erweichungspunkte T_{E} von Klebharzen liegen bei mindestens 40 °C.

Die Angaben zum Erweichungspunkt T_{E} von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung); die Messungen erfolgen im Glycerolbad.

Als Klebharze können beispielsweise hydrierte oder nicht hydrierte Kohlenwasserstoffharze (C9 oder C5-Harze wie zum Beispiel Regalite) verwendet werden. Geeignet und bevorzugt sind auch modifizierte Kohlenwasserstoffharze wie zum Beispiel modifizierte C9-Harze mit einem DACP von kleiner als -30 °C. Bevorzugt geeignet sind ferner unter anderem hydrierte Polymerisate des Dicyclopentadiens (zum Beispiel Escorez 5300er Serie; Exxon Chemicals), hydrierte Polymerisate von bevorzugt C₈- und C₉-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von C₈- und C₉-Aromaten (zum Beispiel Regalite und Regalrez Serien; Eastman Inc. oder Arkon M; Arakawa), hydrierte Polyterpenharze (zum Beispiel Clearon M; Yasuhara), hydrierte C₅/C₉-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Besonders bevorzugt eingesetzte Harze sind (teil-)hydrierte Kohlenwasserstoffharze wie sie beispielsweise von der Firma Eastman unter den Handelsnamen Eastotac und Regalite vertrieben werden. Gegebenenfalls handelt es sich bei den Klebharzen um Polyterpenharze auf Basis von α-Pinen und/oder β-Pinen und/oder δ-Limone oder Terpenphenolharze.

Auch Kombinationen der vorstehend genannten Klebharze sowie weitere geeignete Klebharze können eingesetzt werden, um die Eigenschaften der resultierenden Haftklebemasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen. Dem Fachmann ist geläufig, welche Harze abhängig von den Eigenschaften des EPDM-Kautschuks, insbesondere des Ethylengehalts, vorzugsweise auszuwählen sind. Bevorzugte Klebharze weisen einen DACP von weniger als - 20 °C, bevorzugter weniger als - 40 °C und insbesondere weniger als - 60 °C auf.

Der Anteil an Klebharz in der Haftklebemasse liegt vorzugsweise bei 60 bis 150 phr, vorzugsweise 70 bis 120 phr.

Die in der vorliegenden Anmeldung gemachten Angaben in phr bedeuten Gewichtsteile der betreffenden Komponente bezogen auf 100 Gewichtsteile aller EPDM-Polymerkomponenten der Haftklebemasse, also ohne Berücksichtigung der Klebharze, der Weichmacher oder etwaiger Additive. Die EPDM-Polymerkomponenten umfassen dabei alle festen EPDM-Kautschuke.

Die Angabe Gew.-% hingegen ist stets bezogen auf die Zusammensetzung der gesamten Haftklebemasse.

Besonders bevorzugt ist es ferner, wenn in der Haftklebemasse der Anteil an Weichmacher bis zu 20 Gew.-%, vorzugsweise zwischen 5 und 15 Gew.-%, insbesondere zwischen 8 und 13 Gew.-%, beträgt, bezogen auf das Gesamtgewicht der Haftklebemasse.

Weichmacher sind Plastifizierungsmittel wie zum Beispiel Weichharze, Phosphate oder Polyphosphate, paraffinische und naphthenische Öle, Oligomere wie Oligobutadienen, - isoprenen, flüssigen Terpenharze, pflanzliche und tierische Ölen und Fette. Weichharze können die gleiche chemische Basis wie die erfindungsgemäß einsetzbaren Klebharze aufweisen, unterscheiden sich von diesen jedoch durch ihren Erweichungspunkt, der typischerweise bei < 40 °C liegt. Besonders bevorzugt kommen im erfindungsgemäßen Verfahren als Weichmacher Weißöle zum Einsatz. Weißöle sind paraffinische, d.h. paraffinhaltige Öle. Neben paraffinischen Bestandteilen enthalten sie häufig naphthenische Bestandteile. Bevorzugt enthalten sie keine aromatischen Bestandteile und keine Schwefelverbindungen. Falls als Weichmacher Öl eingesetzt wird, kann es sich um Mineralöl oder synthetisches Öl handeln.

Die erfindungsgemäß umfasste Haftklebemasse weist, wie vorstehend ausgeführt, zum Beispiel in der Anwendung als Abdeckband bereits ohne Vernetzung eine ausreichend gute Festigkeit bei rückstandsfreier Entfernung des Abdeckbandes auf.

Es besteht die Möglichkeit, diese Festigkeit durch Vernetzung noch weitere zu erhöhen.

Der EPDM-Kautschuk kann dazu mit weiteren funktionellen Gruppen wie beispielsweise Silanen, Acrylaten oder Maleinsäureanhydrid, zum Beispiel durch reaktive Pfropfung, funktionalisiert werden. Diese funktionellen Gruppen ermöglichen eine nachträgliche Vernetzung.

Eine Vernetzung erfolgt mit energiereichen Strahlen, UV-Licht oder Chemikalien wie Peroxiden, Phenolharzen oder Schwefelverbindungen.

Der Klebemasse können daher zusätzlich Vernetzer und Promotoren zur Vernetzung beigemischt werden. Geeignete Vernetzer für die Elektronenstrahlvernetzung und Peroxidvernetzung sind beispielsweise bi-oder multifunktionelle Acrylate, Maleimide, Chinone, Cyanurate, bi-oder multifunktionelle Isocyanate (auch in blockierter Form) oder bi-oder multifunktionelle Epoxide.

Die EPDM basierende Haftklebemasse kann zur Einstellung von optischen und klebtechnischen Eigenschaften Additive wie Füllstoffe, Farbstoffe oder Alterungsschutzmittel (Antiozonantien, Antioxidantien (primäre und sekundäre), Lichtschutzmittel usw.) enthalten. Als Additive zur Klebemasse werden typischerweise genutzt:
- primäre Antioxidantien wie zum Beispiel sterisch gehinderte Phenole
- sekundäre Antioxidantien wie zum Beispiel Phosphite oder Thioether
- Lichtschutzmittel wie zum Beispiel UV-Absorber oder sterisch gehinderte Amine

Die Füllstoffe können verstärkend oder nicht verstärkend sein. Vor allem zu nennen sind hier Siliziumdioxide (sphärisch, nadelförmig oder unregelmäßig wie die pyrogenen Silicas), Schichtsilikate, Kalziumcarbonate, Zinkoxide, Titandioxide, Aluminiumoxide oder Aluminiumoxidhydroxide.

Die Konzentration der die optischen und klebtechnischen Eigenschaften beeinflussenden Additive liegt vorzugsweise bei bis zu 20 Gew.-%, weiter vorzugsweise bei bis zu 15 Gew.-%, weiter vorzugsweise bei bis zu 5 Gew.-%.

Erfindungsgemäß sollten die Anteile sämtlicher zugesetzter Stoffe (neben EPDM-Kautschuk, Klebharz und Weichmacher) wie Füllstoffe und/oder Farbstoffe und/oder Alterungsschutzmittel in der Summe 5 Gew.-%, vorzugsweise 2 Gew.-% nicht übertreffen. Die aufgezählten Stoffe sind nicht zwingend, die Klebemasse funktioniert auch, ohne dass diese einzeln oder in beliebiger Kombination zugesetzt sind, also ohne Füllstoffe und/oder Farbstoffe und/oder Alterungsschutzmittel.

Die erfindungsgemäß umfasste Haftklebmasse wird zur Herstellung eines Klebebands verwendet. Die vorliegende Erfindung betrifft daher ein Haftklebeband, das mindestens eine Schicht aus einer erfindungsgemäß umfassten Haftklebemasse aufweist.

Der Ausdruck "Klebeband" im Sinne dieser Erfindung umfasst alle ein- oder beidseitig mit Klebmasse beschichteten flächigen Gebilde wie in zwei Dimensionen ausgedehnte Gebilde (z.B. Folien oder Folienabschnitte), Bänder mit ausgedehnter Länge und begrenzter Breite, Bandabschnitte, Stanzlinge, Etiketten und dergleichen, auch Mehrschichtanordnungen. Vorzugsweise liegt das Klebeband als durchgehende Bahn in Form einer Rolle und nicht als Stanzling oder Etikett vor. Das Klebeband kann zum Beispiel in Form einer Rolle, also in Form einer archimedischen Spirale auf sich selbst aufgerollt, hergestellt werden. Im Rahmen der vorliegenden Erfindung wird ein temporärer Träger, im Gegensatz zu einem permanenten Träger, nicht als Bestandteil eines Klebebands angesehen, sondern lediglich als Hilfsmittel bei dessen Herstellung (Prozessliner) oder als Mittel zu dessen Abdeckung angesehen.

Des Weiteren umfasst der Ausdruck "Klebeband" auch so genannte "Transferklebebänder", das heißt Klebebänder ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt.

Der Masseauftrag (Beschichtungsstärke) der Klebemasse liegt vorzugsweise zwischen 10 und 200 g/m², weiter vorzugsweise zwischen 15 und 100 g/m², ganz besonders vorzugsweise zwischen 20 und 70 g/m².

Als Trägermaterialien für das Haftklebeband werden die dem Fachmann geläufigen und üblichen Trägermaterialien wie Papier, Gewebe, Vlies oder Folien aus zum Beispiel Polyester wie Polyethylenterephthalat (PET), Polyethylen, Polypropylen, verstreckten Polypropylen, Polyvinylchlorid, verwendet. Ebenfalls eingesetzt werden können Trägermaterialien aus nachwachsenden Rohstoffen wie Papier, Gewebe aus zum Beispiel Baumwolle, Hanf, Jute, Brennesselfasern oder Folien aus zum Beispiel Polymilchsäure, Cellulose, modifizierter Stärke, Polyhydroxyalkanoat. Diese Aufzählung ist nicht abschließend zu verstehen, sondern im Rahmen der Erfindung ist auch die Verwendung anderer Folien möglich.

Besonders bevorzugt sind Folien aus PET und verstrecktem Polypropylen, wobei Folien aus PET als Trägermaterial ganz besonders bevorzugt sind.

Das Haftklebeband wird dadurch gebildet, dass auf den Träger partiell oder vollflächig die Haftklebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Klebemasse rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Bei der Herstellung des Klebebands wird ein Träger mit der Haftklebmasse beschichtet. Optional erfolgt noch eine Vernetzung, die jedoch bei den erfindungsgemäß umfassten Haftklebemassen keineswegs erforderlich ist. Bei dem Träger kann es sich um einen permanenten Träger oder um einen temporären Träger handeln. Unter "Beschichten eines Trägers mit einer Haftklebmasse" ist im Rahmen der vorliegenden Anmeldung insbesondere gemeint, dass der fertige Träger mit der Haftklebmasse beschichtet wird. Es kann damit aber auch gemeint sein, dass die Haftklebmasse mit dem Träger coextrudiert wird. Unter "Beschichten eines Trägers mit einer Haftklebmasse" kann in der vorliegenden Anmeldung ferner gemeint sein, dass die Haftklebmasse in direkten Kontakt mit einer Oberfläche des Trägers gebracht wird, d.h. direkt auf einer Oberfläche des Trägers angeordnet wird. Alternativ kann damit aber auch gemeint sein, dass die Haftklebmasse nicht direkt mit einer Oberfläche des Trägers in Kontakt gebracht wird, sondern beim Beschichten des Trägers mit der Haftklebmasse zwischen dem Träger und der Haftklebmasse mindestens eine weitere Schicht angeordnet wird. Vorzugsweise wird beim "Beschichten eines Trägers mit einer Haftklebmasse" die Haftklebmasse in direkten Kontakt mit einer Oberfläche des Trägers gebracht. Der Träger kann wahlweise einseitig oder beidseitig mit einer erfindungsgemäß umfassten Haftklebmasse beschichtet werden. Falls der Träger beidseitig mit einer erfindungsgemäß umfassten Haftklebmasse beschichtet wird, können die beiden Seiten des Trägers entweder mit hinsichtlich ihrer Zusammensetzung identischen Haftklebmassen beschichtet werden oder aber mit Haftklebmassen, die sich in ihrer Zusammensetzung unterscheiden, vorzugsweise sind die erfindungsgemäß umfassten Haftklebmassen hinsichtlich ihrer Zusammensetzung identisch.

Besonders bevorzugt im Sinne der vorliegenden Erfindung ist ein Haftklebeband, bei dem der Träger einseitig mit der erfindungsgemäßen Haftklebemasse beschichtet ist, das als Abdeckband verwendet wird.

Die Herstellung des erfindungsgemäßen Haftklebebandes kann durch übliche, dem Fachmann bekannte Beschichtungsverfahren erfolgen. Hierbei kann die Haftklebmasse inklusive der Additive, gelöst in einem geeigneten Lösemittel, mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt werden. Alternativ kann die Beschichtung der Trägerfolie oder Trennfolie auch in einem lösemittelfreien Verfahren erfolgen. Hierzu wird der EPDM-Kautschuk in einem Extruder erwärmt und aufgeschmolzen. In dem Extruder können weitere Prozessschritte wie das Mischen mit den beschriebenen Additiven, Filtration oder eine Entgasung erfolgen. Die Schmelze wird dann mittels eines Kalanders auf die Trägerfolie oder Trennfolie beschichtet.

Mögliche Verfahren, nach denen EPDM-Kautschuk basierende Klebemassen wie die erfindungsgemäß umfasste hergestellt werden, finden sich in der DE 198 06 609 A1 sowie in den Schutzrechten WO 94/11175 A1, WO 95/25774 A1, WO 97/07963 A1.

Schließlich umfasst die vorliegende Erfindung die Verwendung eines erfindungsgemäßen Haftklebebandes als Abdeckband (Englisch: "masking tape"), insbesondere in der Automobilindustrie, und zwar insbesondere bei Lackierprozessen. Zu den Anforderungen an ein solches Abdeckband gehören die Sicherstellung einer zuverlässigen Haftung, die Vermeidung eines Oversprays bei Beschichtungen, hohe Temperaturbeständigkeit sowie einfaches und rückstandsfreies Entfernen des Klebebands zur Vermeidung von Nacharbeit.

Die erfindungsgemäß umfasste Haftklebemasse gewährleistet eine hohe Klebkraft bei gleichzeitig rückstandsfreier Ablösung nach erfolgter Lackierung und Trocknung, und zwar auch bei Temperaturen bis 180°C.

### Prüfmethoden

Die Messungen werden, wenn nicht anders angegeben, bei einem Prüfklima von 23 ± 1 °C und 50 ± 5 % rel. Luftfeuchte durchgeführt.

### Lagerung

Vor den im Weiteren beschriebenen Tests werden die Muster für mindestens 24 Stunden bei 23 °C und 50% rel. Luftfeuchtigkeit gelagert.

### Erweichungspunkt

Die Angaben zum Erweichungspunkt T_{E} von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung); die Messungen erfolgen im Glycerolbad.

### Klebkraft

Die Prüfung der Schälfestigkeit (Klebkraft) erfolgt in Anlehnung an PSTC-1.

Ein 2 cm breiter Streifen eines einseitigen Klebebands, bestehend aus einer 23 µm dicken, mit Trichloressigsäure geätzten PET-Folie und einer darauf aufgebrachten 30 µm dicken Klebebeschichtung wird auf dem Prüfuntergrund in Form einer ASTM-Stahlplatte durch fünfmaliges doppeltes Überrollen mittels einer 4 kg Rolle verklebt. Die Oberfläche der Stahlplatte wird zuvor mit Aceton gereinigt. Die Platte wird eingespannt, und der Selbstklebestreifen über sein freies Ende an einer Zugprüfmaschine unter einem Schälwinkel von 180° mit einer Geschwindigkeit von 300 mm/min (wenn nicht anders angegeben) abgezogen, und die dafür notwendige Kraft ermittelt. Die Messergebnisse sind in N/cm angegeben und über drei Messungen gemittelt und normiert auf die Breite des Streifens in N/cm angegeben.

Die initiale Klebkraft (Klebkraft ASTM-Stahl) wurde direkt im Anschluss an das Verkleben und max. 10 min nach der Verklebung gemessen.

### Masseauftrag

Der Masseauftrag einer Haftklebmasseschicht in g/m² kann durch Bestimmung der Masse eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Masse eines Abschnitts gleicher Dimensionen des verwendeten Trägers bzw. Liners.

### Mikroschertest

Dieser Test dient der Schnellprüfung der Scherfestigkeit von Klebebändern unter Temperaturbelastung.

### Mikroscherweg-Messung

Ein aus dem jeweiligen Probenmuster geschnittenes einseitiges Klebeband (Länge ca. 50 mm, Breite 10 mm) wird mit der Haftklebmasseseite auf eine mit Aceton gereinigte Stahl-Prüfplatte verklebt, so dass die Stahlplatte das Klebeband rechts und links überragt und das Klebeband die Prüfplatte am oberen Rand um 2 mm überragt. Die Verklebungsfläche der Probe beträgt Höhe x Breite = 13 mm x 10 mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, das als Auflage für den Wegmessfühler dient. Die Probe wird mittels der Prüfplatte senkrecht aufgehängt. Das zu messende Probenmuster wird am unteren Ende mit einem Gewicht von 100 g belastet. Die Prüftemperatur beträgt jeweils 40 °C, die Prüfdauer beträgt 15 Minuten unter Belastung, anschließend 15 Minuten ohne Belastung. Die Scherstrecke nach der vorgegebenen Testdauer bei konstanter Temperatur ist als Ergebnis in µm angegeben.

### Streifentest

Dieser Test dient zur Festlegung der Temperaturbeständigkeit eines Haftklebebandes. Es wird auf Rückstände geprüft, die ggf. nach Temperaturbelastung und anschließendem Demaskieren auf dem Untergrund verbleiben.

Zwei 2 cm breite Streifen eines einseitigen Klebebands, bestehend aus einer 23 µm dicken, mit Trichloressigsäure geätzten PET-Folie und einer darauf aufgebrachten 30 µm dicken Klebebeschichtung werden auf den vorgebebenen Untergrund (typischerweise lackierte Aluminiumtafeln (Schwarzlackbleche)) geklebt. Der Oberfläche des Prüfuntergrunds wird zuvor mit Benzin abgewischt. Anschließend wird das Prüfmuster der vorgegebenen Temperaturbeanspruchung unterzogen. Nach der definierten Beanspruchungszeit wird ein Teststreifen nach Temperierung warm (auf 80 °C abgekühlt) je zur Hälfte im 90 °- und 180 ° - Winkel abgezogen, der zweite genauso bei Raumtemperatur.

Im Folgenden soll die Erfindung anhand mehrerer Beispiele näher erläutert werden, ohne damit die Erfindung unnötig einschränken zu wollen.

### Eingesetzte, kommerziell erhältliche Chemikalien

| | |
|---|---|
| Regalite R 1100: | Hydriertes Kohlenwasserstoffharz mit einem Erweichungspunkt von 100 °C der Firma Eastman |
| Dercolyte A 115: | α-Pinen basiertes Polyterpenharz mit einem Erweichungspunkt von 115 °C der Firma DRT |
| Escorez 1304: | Aliphatisches Kohlenwasserstoffharz mit einem Erweichungspunkt von 100 °C der Firma ExxonMobil |
| Irganox 1726: | Phenolisches Antioxidans mit schwefelbasierter Funktion eines sekundären Antioxidans |
| Dymalink 634: | wasserfreies Zinkdimethacrylat mit Nicht-Nitroso-Scorchverzögerer |
| TMPTA: | Trimethylolpropantriacrylat aus der Gruppe der Carbonsäureester |
| TBzTD: | Ultra-Vulkanisationsbeschleuniger auf Basis von Tetra-benzylthiuramdisulfid aus der Gruppe der Thiurame |
| ZBEC: | Ultra-Vulkanisationsbeschleuniger auf Basis von Amin-dithiocarbamat Herstellung der Haftklebemassen |

Die in den Beispielen aufgeführten Haftklebemassen wurden als lösemittelbasierte Massen in einem Kneter mit Koppelsigmaknethaken homogenisiert. Als Lösungsmittel wurde Benzin (Gemisch von Kohlenwasserstoffen) verwendet. Der Kneter wurde dabei mittels Wasserkühlung gekühlt.

In einem ersten Schritt wurden zunächst die festen EPDM-Kautschuke mit mehr als einem Drittel der Gesamtmenge Benzin für 16 Stunden bei 23 °C vorgequollen (Vorbatch). Anschließend wurde der Vorbatch für 15 min geknetet. Anschließend wurde das Harz in drei gleichmäßigen Portionen zugegeben. Dabei wurde nach den ersten beiden Zugaben jeweils 10 min und nach der dritten Zugabe 40 min geknetet. Anschließend wurde Weichmacher zugegeben und für 10 min geknetet. Danach wurde das restliche Benzin je zur Hälfte zugegeben und im ersten Schritt 20 min, im zweiten Schritt 30 min eingeknetet. Der finale Feststoffgehalt liegt bei 28 Gew.-%.

### Herstellung der Prüfmuster

Die Haftklebmassen wurden auf einem handelsüblichen Laborstreichtisch (zum Beispiel von der Firma SMO (Sondermaschinen Oschersleben GmbH)) mit Hilfe einer Streichrakel auf eine 23 µm dicke, mit Trichloressigsäure geätzte PET-Folie beschichtet. Das Benzin wurde bei 105 °C im Umlufttrockenofen für 10 min getrocknet. Die Spaltreite bei der Beschichtung wurde so gewählt, dass nach dem Trocknen des Lösungsmittels ein Masseauftrag von 30 g/m² erreicht wurde. Anschließend wurden die trockenen Muster mit silikonisierter PET-Folie abgedeckt und bis zur weiteren Ausprüfung bei 23 °C und 50 % rel. Luftfeuchtigkeit gelagert.

Die so hergestellten Prüfmuster werden mit den vorstehend beschriebenen Prüfmethoden Streifentest (Temperaturbeständigkeit), Klebkraft auf Stahl und Mikroscherweg charakterisiert. Diese drei Prüfmethoden werden in Verbindung mit ggf. aufgetretenen Reißern für jede der vier Demaskierbedingungen nach den folgenden Notenskalen beurteilt.

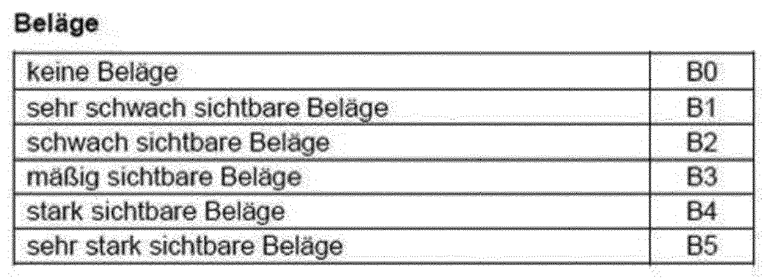

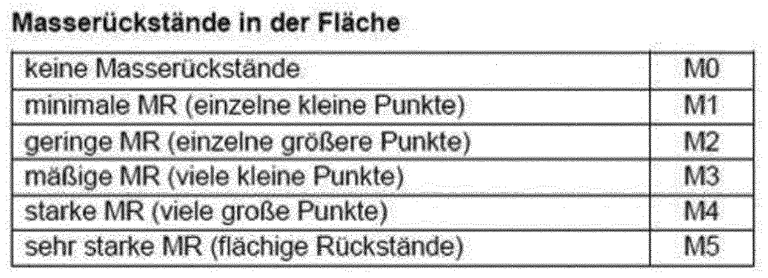

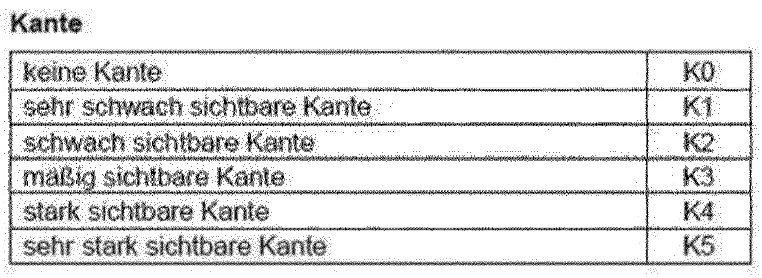

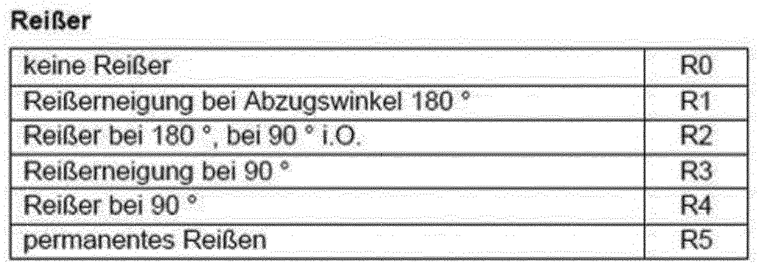

Die Ergebnisse für die jeweiligen Prüfmuster sind in der Tabelle 1 wiedergegeben.

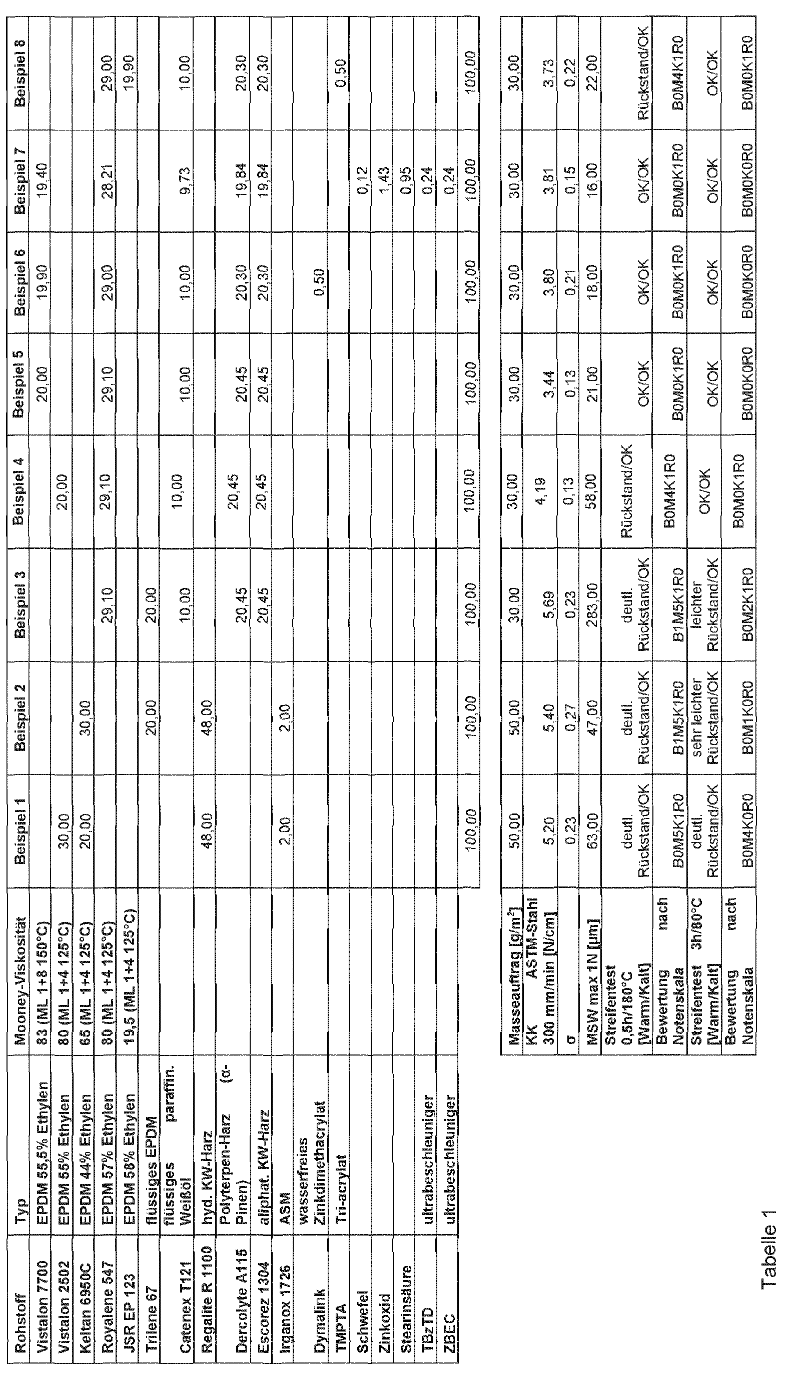

Mit der Angabe "flüssig" bei einigen Edukten ist gemeint, dass die Edukte bei Raumtemperatur flüssig sind (Erweichungspunkt kleiner 60 °C beziehungsweise 40 °C).

Die Beispiel 1 bis 4 und 8 sind Vergleichsbeispiele. Sie alle haben als Kautschuckomponente kein EPDM mit einer Mooney-Viskosität von mindestens 83 (ML 1+8 150°C). Die Haftklebemassen zeigen (zum Teil deutliche) Rückstände beim Streifentest beim warmen Abziehen. Als Abdeckbänder sind sie daher nicht geeignet.

Anders die Haftklebemassen der Beispiele 5 bis 7. Alle weisen ca. 20 Gew.-% eines EPDMs mit einer Mooney-Viskosität von mindestens 83 (ML 1+8 150°C) auf. Sie zeigen hervorragende Eigenschaften im Streifentest, und die beklebten Oberflächen weisen weder beim Warm- noch bei Kaltabziehen Rückstände auf. Zugleich verfügen sie über sehr gute Scherfestigkeit, die diejenige der Vergleichsbeispiele noch übertrifft.

## Patentansprüche

1. Haftklebeband, das einen Träger und mindestens eine Schicht aus einer Haftklebemasse auf Basis von festem EPDM-Kautschuk umfasst, wobei die Haftklebemasse Weichmacher und Klebharz enthält,
und wobei
die Haftklebemasse einen Blend aus mindestens zwei festen EPDM-Kautschuken enthält, wobei der Blend von 10 bis 30 Gew.-% mindestens eines ersten EPDM-Kautschuks mit einer Mooney-Viskosität von mindestens 83 (ML 1+8 150°C) und von 20 bis 50 Gew.-% mindestens eines zweiten EPDM-Kautschuks mit einer Mooney-Viskosität in einem Bereich von 65 bis 85 (ML 1+4 125°C) aufweist.

2. Haftklebeband nach Anspruch 1, **dadurch gekennzeichnet, dass** der feste EPDM-Kautschuk zu 55 bis 75 Gew.-%, vorzugsweise 55 bis 65 Gew.-%, insbesondere größer 55 bis 60 Gew.-%, aus Ethylen aufgebaut ist, bezogen auf das Gesamtgewicht der zugrunde liegenden Monomerzusammensetzung.

3. Haftklebeband nach Anspruch 1 oder 2, **dadurch gekennzeichnet, dass** in der Haftklebemasse der Anteil des ersten EPDM-Kautschuks 15 bis 25 Gew.-%, vorzugsweise 18 bis 23 Gew.-%, insbesondere 19 bis 21 Gew.-% beträgt, bezogen auf das Gesamtgewicht der Haftklebemasse.

4. Haftklebeband nach einem der Ansprüche 1 bis 3, **dadurch gekennzeichnet, dass** in der Haftklebemasse der Anteil des zweiten EPDM-Kautschuks 25 bis 40 Gew.-%, vorzugsweise 27 bis 35 Gew.-%, insbesondere 28 bis 31 Gew.-% beträgt, bezogen auf das Gesamtgewicht der Haftklebemasse.

5. Haftklebeband nach einem der Ansprüche 1 bis 4, **dadurch gekennzeichnet, dass** der erste EPDM-Kautschuk eine bimodale Molmassenverteilung aufweist.

6. Haftklebeband nach einem der Ansprüche 1 bis 5, **dadurch gekennzeichnet, dass** in der Haftklebemasse der Anteil an Weichmacher bis zu 20 Gew.-%, vorzugsweise zwischen 5 und 15 Gew.-%, insbesondere zwischen 8 und 13 Gew.-%, beträgt, bezogen auf das Gesamtgewicht der Haftklebemasse.

7. Haftklebeband nach einem der Ansprüche 1 bis 6, **dadurch gekennzeichnet, dass** der Weichmacher Weißöl ist.

8. Haftklebeband nach einem der Ansprüche 1 bis 7, **dadurch gekennzeichnet, dass** die Haftklebemasse 60 bis 150 phr, vorzugsweise 70 bis 120 phr Klebharz enthält.

9. Haftklebeband nach einem der Ansprüche 1 bis 8, **dadurch gekennzeichnet, dass** die Haftklebemasse vernetzt ist.

10. Haftklebeband nach einem der Ansprüche 1 bis 9, **dadurch gekennzeichnet, dass** das Trägermaterial des Trägers aus Folien aus PET und verstrecktem Polypropylen ausgewählt ist, wobei Folien aus PET als Trägermaterial ganz besonders bevorzugt sind.

11. Haftklebeband nach einem der vorherigen Ansprüche, **dadurch gekennzeichnet, dass** es einen Träger aus PET aufweist.

12. Verwendung des Haftklebebands nach einem der Ansprüche 1 bis 11 als Abdeckband.

## Claims

1. Pressure-sensitive adhesive tape comprising a carrier and at least one layer of a pressure-sensitive adhesive based on solid EPDM rubber, where the pressure-sensitive adhesive comprises plasticizer and tackifier resin,
and where
the pressure-sensitive adhesive comprises a blend of at least two solid EPDM rubbers, the blend comprising from 10 to 30 wt% of at least one first EPDM rubber having a Mooney viscosity of at least 83 (ML 1+8 150°C) and from 20 to 50 wt% of at least one second EPDM rubber having a Mooney viscosity in a range from 65 to 85 (ML 1+4 125°C).

2. Pressure-sensitive adhesive tape according to Claim 1, **characterized in that** the solid EPDM rubber is composed to an extent of 55 to 75 wt%, preferably 55 to 65 wt%, more particularly more than 55 to 60 wt%, of ethylene, based on the total weight of the parent monomer composition.

3. Pressure-sensitive adhesive tape according to Claim 1 or 2, **characterized in that** the fraction of the first EPDM rubber in the pressure-sensitive adhesive is 15 to 25 wt%, preferably 18 to 23 wt%, more particularly 19 to 21 wt%, based on the total weight of the pressure-sensitive adhesive.

4. Pressure-sensitive adhesive tape according to any of Claims 1 to 3, **characterized in that** the fraction of the second EPDM rubber in the pressure-sensitive adhesive is 25 to 40 wt%, preferably 27 to 35 wt%, more particularly 28 to 31 wt%, based on the total weight of the pressure-sensitive adhesive.

5. Pressure-sensitive adhesive tape according to any of Claims 1 to 4, **characterized in that** the first EPDM rubber has a bimodal molar mass distribution.

6. Pressure-sensitive adhesive tape according to any of Claims 1 to 5, **characterized in that** the fraction of plasticizer in the pressure-sensitive adhesive is up to 20 wt%, preferably between 5 and 15 wt%, more particularly between 8 and 13 wt%, based on the total weight of the pressure-sensitive adhesive.

7. Pressure-sensitive adhesive tape according to any of Claims 1 to 6, **characterized in that** the plasticizer is white oil.

8. Pressure-sensitive adhesive tape according to any of Claims 1 to 7, **characterized in that** the pressure-sensitive adhesive contains 60 to 150 phr, preferably 70 to 120 phr, of tackifier resin.

9. Pressure-sensitive adhesive tape according to any of Claims 1 to 8, **characterized in that** the pressure-sensitive adhesive is crosslinked.

10. Pressure-sensitive adhesive tape according to any of Claims 1 to 9, **characterized in that** the carrier material of the carrier is selected from films of PET and oriented polypropylene, where films of PET are especially preferred as carrier material.

11. Pressure-sensitive adhesive tape according to any of the preceding claims, **characterized in that** it comprises a PET carrier.

12. Use of the pressure-sensitive adhesive tape according to any of Claims 1 to 11 as masking tape.

## Revendications

1. Ruban autoadhésif qui comprend un support et au moins une couche d'une masse autoadhésive à base de caoutchouc EPDM solide, la masse autoadhésive contenant plastifiant et résine adhésive,
et
la masse autoadhésive contenant un mélange d'au moins deux caoutchoucs EPDM solides, le mélange présentant de 10 à 30 % en poids d'au moins un premier caoutchouc EPDM doté d'une viscosité Mooney d'au moins 83 (ML 1+8 150 °C) et de 20 à 50 % en poids d'au moins un deuxième caoutchouc EPDM doté d'une viscosité Mooney dans une plage de 65 à 85 (ML 1+4 125 °C).

2. Ruban adhésif selon la revendication 1, **caractérisé en ce que** le caoutchouc EPDM solide est construit avec 55 à 75 % en poids, de préférence 55 à 65 % en poids, en particulier plus de 55 à 60 % en poids d'éthylène, par rapport au poids total de la composition de monomères sous-jacente.

3. Ruban autoadhésif selon la revendication 1 ou 2, **caractérisé en ce que** dans la masse autoadhésive, la proportion du premier caoutchouc EPDM est de 15 à 25 % en poids, de préférence 18 à 23 % en poids, en particulier 19 à 21 % en poids, par rapport au poids total de la masse autoadhésive.

4. Ruban autoadhésif selon l'une quelconque des revendications 1 à 3, **caractérisé en ce que** dans la masse autoadhésive, la proportion du deuxième caoutchouc EPDM est de 25 à 40 % en poids, de préférence 27 à 35 % en poids, en particulier 28 à 31 % en poids, par rapport au poids total de la masse autoadhésive.

5. Ruban autoadhésif selon l'une quelconque des revendications 1 à 4, **caractérisé en ce que** le premier caoutchouc EPDM présente une distribution de masses molaires bimodale.

6. Ruban autoadhésif selon l'une quelconque des revendications 1 à 5, **caractérisé en ce que** dans la masse autoadhésive, la proportion de plastifiant est de jusqu'à 20 % en poids, de préférence est comprise entre 5 et 15 % en poids, en particulier entre 8 et 13 % en poids, par rapport au poids total de la masse autoadhésive.

7. Ruban autoadhésif selon l'une quelconque des revendications 1 à 6, **caractérisé en ce que** le plastifiant est de l'huile blanche.

8. Ruban autoadhésif selon l'une quelconque des revendications 1 à 7, **caractérisé en ce que** la masse autoadhésive contient 60 à 150 phr, de préférence 70 à 120 phr de résine adhésive.

9. Ruban autoadhésif selon l'une quelconque des revendications 1 à 8, **caractérisé en ce que** la masse autoadhésive est réticulée.

10. Ruban autoadhésif selon l'une quelconque des revendications 1 à 9, **caractérisé en ce que** le matériau de support du support est choisi parmi des feuilles de polypropylène étiré et de PET, des feuilles de PET en tant que matériau de support étant tout particulièrement préférées.

11. Ruban autoadhésif selon l'une quelconque des revendications précédentes, **caractérisé en ce qu'**il présente un support en PET.

12. Utilisation du ruban autoadhésif selon l'une quelconque des revendications 1 à 11 en tant que bande de recouvrement.
